# EUROPEAN PATENT SPECIFICATION

(11) **EP 3 275 240 B1**
(45) Date of publication and mention of the grant of the patent: **05.08.2020**
(21) Application number: 15887951.0
(22) Date of filing: 27.03.2015
(51) Int. Cl.: H04W 28/06, H04W 84/12

(54) **MAC HEADER COMPRESSION FOR HIGH EFFICIENCY WLAN**
MAC-HEADERKOMPRIMIERUNG FÜR HOCHEFFIZIENTES WLAN
COMPRESSION D'EN-TÊTE DE CONTRÔLE D'ACCÈS AU SUPPORT (MAC) POUR UN RÉSEAU LOCAL ÉTENDU (WLAN) DE HAUTE EFFICACITÉ

(43) Date of publication of application: 31.01.2018
(73) Proprietor: Intel IP Corporation, Santa Clara, CA 95054 (US)
(72) Inventor: MENG, Peng, Minhang, 200240, Shangai 31 (CN); YANG, Rongzhen, Shanghai 31, 200030 (CN); LI, Qinghua, San Ramon, California 94582 (US); STACEY, Robert, Portland, Oregon 97210 (US)
(74) Representative: HGF
(86) International application number: PCT/US2015/023165
(87) International publication number: WO 2016/159942

(56) References cited:
- US-A1- 2012 243 452
- US-A1- 2013 107 895
- US-A1- 2013 107 895
- US-A1- 2013 155 952
- US-A1- 2013 195 001
- US-A1- 2013 215 907
- US-A1- 2013 294 431
- US-A1- 2015 029 977

## Description

### TECHNICAL FIELD

This disclosure generally relates to systems and methods for wireless communications and, more particularly, to Medium Access Control (MAC) headers.

### BACKGROUND

Wireless devices are becoming widely prevalent and are increasingly requesting access to wireless channels. A next generation WLAN, IEEE 802.1 lax or High-Efficiency WLAN (HEW), is under development. When two devices communicate in accordance with an IEEE 802.11 standard, Medium Access Control (MAC) headers may be added at the beginning of a network packet in order to at least identify the source and destination of the communication.

US 2013/107895 discloses methods, devices and computer program products for compressing packet headers and payloads as described herein. In one embodiment, a packet including a packet header and a packet payload is compressed in accordance with a compression map, and the compressed packet is transmitted.

### BRIEF DESCRIPTION OF THE DRAWINGS

FIG. 1 depicts a network diagram illustrating an example network environment of an illustrative header compression system, according to one or more example embodiments of the disclosure;
FIG. 2 depicts an illustrative schematic diagram of a typical aggregated MAC protocol data unit (A-MPDU);
FIG. 3A depicts an illustrative schematic diagram of a delimiter field in an A-MPDU;
FIG. 3B depicts an illustrative schematic diagram of a compression control field, in accordance with one or more example embodiments of the present disclosure;
FIG. 4 depicts an illustrative schematic diagram of a header compression system, in accordance with one or more example embodiments of the present disclosure;
FIG. 5 depicts an illustrative schematic diagram of a header compression system, in accordance with one or more example embodiments of the present disclosure;
FIG. 6 depicts an illustrative schematic diagram of a header compression system, in accordance with one or more example embodiments of the present disclosure;

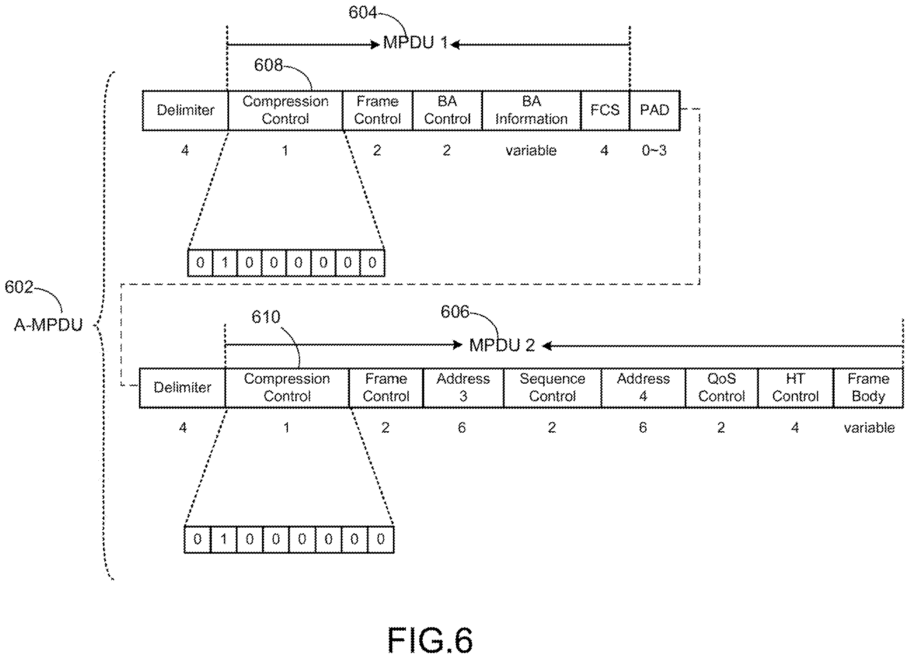

FIG. 6 depicts an illustrative schematic diagram of a header compression system, in accordance with one or more example embodiments of the present disclosure;

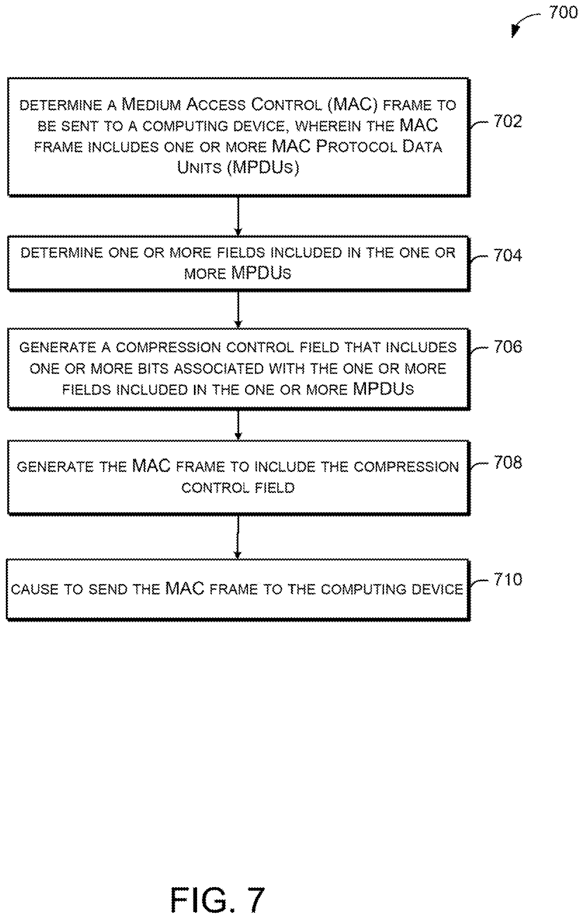

FIG. 7 depicts a flow diagram of an illustrative process for an illustrative header compression system, in accordance with one or more embodiments of the disclosure;

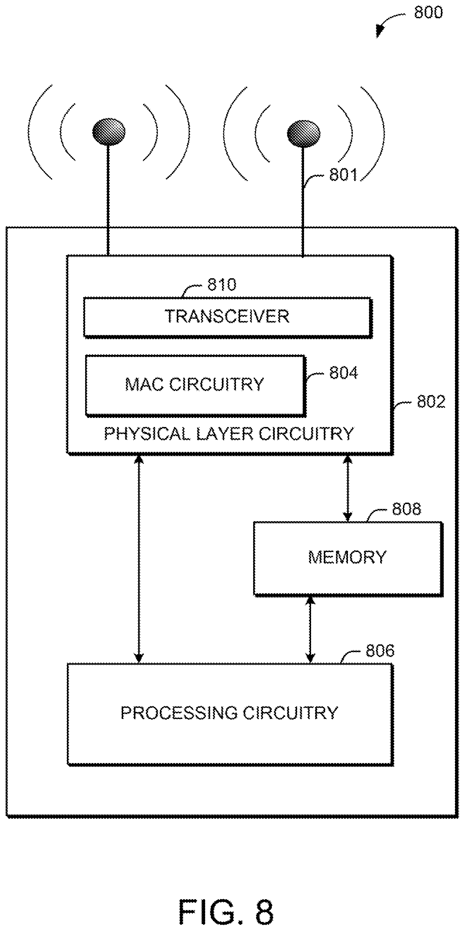

FIG. 8 illustrates a functional diagram of an example user device or example access point, according to one or more example embodiments of the disclosure; and

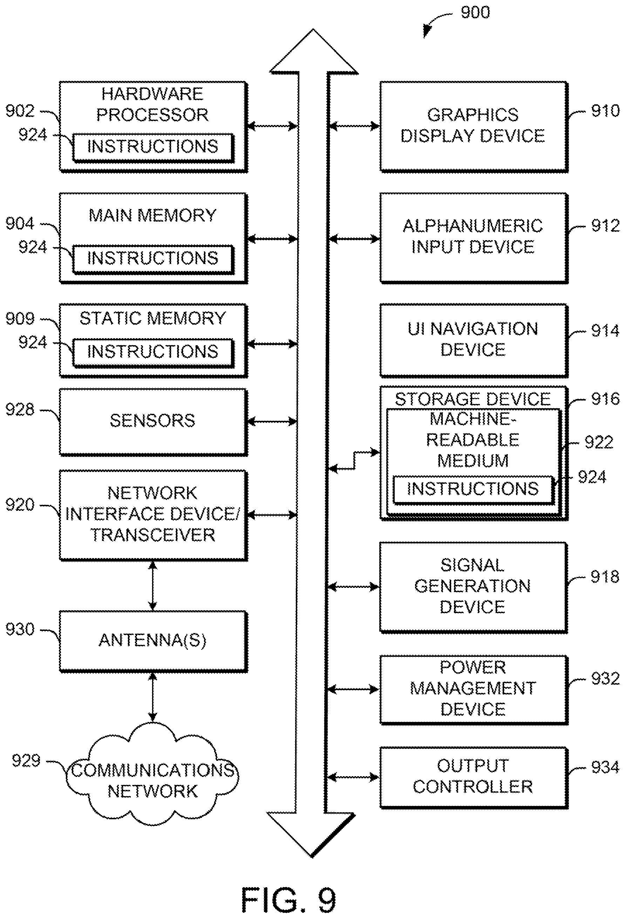

FIG. 9 shows a block diagram of an example of a machine upon which one or more embodiments of the disclosure discussed herein may be performed.

### DETAILED DESCRIPTION

Example embodiments described herein provide certain systems, methods, and devices, for providing signaling information to Wi-Fi devices in various Wi-Fi networks, including, but not limited to, IEEE 802.11ax (referred to as HE or HEW).

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

The word "exemplary" is used herein to mean "serving as an example, instance, or illustration." Any embodiment described herein as "exemplary" is not necessarily to be construed as preferred or advantageous over other embodiments. The terms "computing device", "communication station", "station" (also referred to as STA), "handheld device", "mobile device", "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

The term "access point" (AP) as used herein may be a fixed station. An access point may also be referred to as an access node, a base station, or some other similar terminology known in the art. An access terminal may also be called a mobile station, a user equipment (UE), a wireless communication device, or some other similar terminology known in the art. Embodiments disclosed herein generally pertain to wireless networks. Some embodiments can relate to wireless networks that operate in accordance with one of the IEEE 802.11 standards including the IEEE 802.1 1ax standard.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infra Red (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

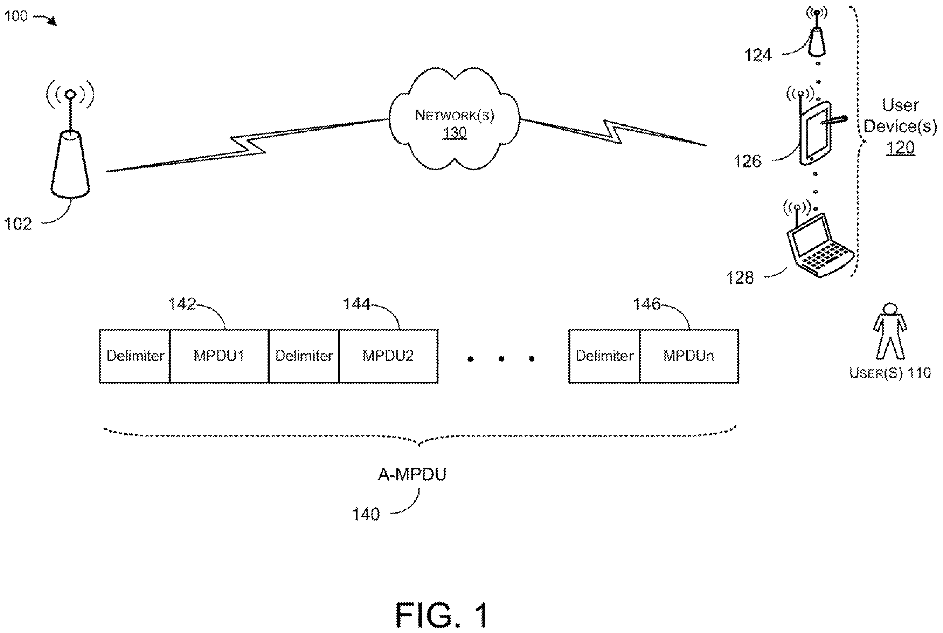

FIG. 1 is a network diagram illustrating an example network environment, according to some example embodiments of the present disclosure. There is shown a wireless network 100, where one or more devices may be communicating with each other and that may exchange an A-MPDU between them. An A-MPDU is an aggregation of one or more MPDUs, which are information that is delivered as a unit among entities in a network and that may contain control information, such as address information, or user data. One purpose for using an aggregated MPDU is to allow multiple MPDUs to be sent to the same receiving device concatenated in a single MPDU (e.g., A-MPDU).

Wireless network 100 can include one or more user devices 120 and one or more access point(s) (AP) 102, which may communicate in accordance with IEEE 802.11 communication standards, including IEEE 802.1 1ax. The user device(s) 120 may be mobile devices that are non-stationary and do not have fixed locations. The one or more APs 102 may be stationary and have fixed locations.

In some embodiments, the user devices 120 and AP 102 can include one or more computer systems similar to that of the functional diagram of FIG. 8 and/or the example machine/system of FIG. 9.

In accordance with some IEEE 802.11ax (High-Efficiency WLAN (HEW)) embodiments, an access point may operate as a master station which may be arranged to contend for a wireless medium (e.g., during a contention period) to receive exclusive control of the medium for an HEW control period. The master station may transmit an HEW master-sync transmission at the beginning of the HEW control period. During the HEW control period, HEW stations may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames.

In some embodiments, the multiple-access technique used during the HEW control period may be a scheduled orthogonal frequency division multiple access (OFDMA) technique, although this is not a requirement. In other embodiments, the multiple access technique may be a time-division multiple access (TDMA) technique or a frequency division multiple access (FDMA) technique. In certain embodiments, the multiple access technique may be a space-division multiple access (SDMA) technique.

One or more illustrative user device(s) 120 may be operable by one or more users 110. The user device(s) 120 may include any suitable processor-driven user device including, but not limited to, a desktop computing device, a laptop computing device, a server, a router, a switch, a smartphone, a tablet, wearable wireless device (e.g., bracelet, watch, glasses, ring, etc.) and so forth.

Any of the user device(s) 120 (e.g., user devices 124, 126, 128), and AP 102 may be configured to communicate with each other via one or more communications networks 130 wirelessly or wired. Any of the communications networks 130 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128), and AP 102 may include one or more communications antennae. Communications antenna may be any suitable type of antenna corresponding to the communications protocols used by the user device(s) 120 (e.g., user devices 124, 124 and 128), and AP 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, or the like. The communications antenna may be communicatively coupled to a radio component to transmit and/or receive signals, such as communications signals to and/or from the user devices 120.

Any of the user devices 120 (e.g., user devices 124, 126, 128), and AP 102 may include any suitable radio and/or transceiver for transmitting and/or receiving radio frequency (RF) signals in the bandwidth and/or channels corresponding to the communications protocols utilized by any of the user device(s) 120 and AP 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n), 5 GHz channels (e.g. 802.11n, 802.11ac), or 60 GHZ channels (e.g. 802.11ad). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

It is know that frame aggregation is an important feature of the IEEE 802.11 MAC protocol. Frame aggregation may increase throughput by sending two or more data frames in a single transmission during data transmission between a transmitting device and a receiving device. Typically, every frame transmitted by an IEEE 802.11 device has a large amount of overhead, including radio level headers, Media Access Control (MAC) frame fields, interframe spacing, and acknowledgment of transmitted frames. At the highest data rates, this overhead can consume more bandwidth than the payload data frame. In order to alleviate this technical issue, frame aggregation may be employed, for example, MAC Service Data Unit (MSDU) aggregation (A-MSDU) and MAC Protocol Data Unit (MPDU) aggregation (A-MPDU). Both types may group several data frames into one large frame. Because management information needs to be specified only once per frame, the ratio of payload data to the total volume of data may be higher, allowing higher throughput.

Referring to FIG. 1, the A-MPDU 140 may contain fully formed MPDUs, which may be aggregated at the MAC protocol layer. The MPDUs are made up of one or more fields that contain information that may be needed for communicating between devices (e.g., between AP 102 and user device(s) 120). Some of these MPDUs may contain similar or same information contained within the one or more fields. For example MPDUs 142, 144 and 146 in the A-MPDU 140 may be addressed to the same receiving device (e.g., user device 120 and/or AP 102), and may be of the same service category (same traffic indicator (TID)). Consequently, one or more fields of the MPDUs (e.g., 142 and 144) in an A-MPDU, may be duplicates. It is understood that a TID is a field within a MAC header under the Quality of Service (QoS) control field. MPDUs (e.g., 142, 144, and 146) may include an MPDU MAC header and other control fields.

In one embodiment, an MPDU MAC header overhead may be minimized by performing compression to improve the IEEE 802.11ax performance and efficiency by leveraging the above features of the A-MPDU. One example of compression may be to omit one or more fields that are a duplicate of other fields in the header portion of the MPDU. An A-MPDU MAC header compression may minimizes the MAC overhead by omitting duplicate fields within one or more MPDUs. For example, header compression may improve the overall IEEE 802.11ax system performance by about 10%∼30%, in accordance with one or more embodiments of this disclosure. At the receiving device (e.g., user device 120), the compression control field may be used to identify which fields have been compressed or omitted. The compression control field may be used at the receiving device in order to reconstruct (decompress) the full MPDUs.

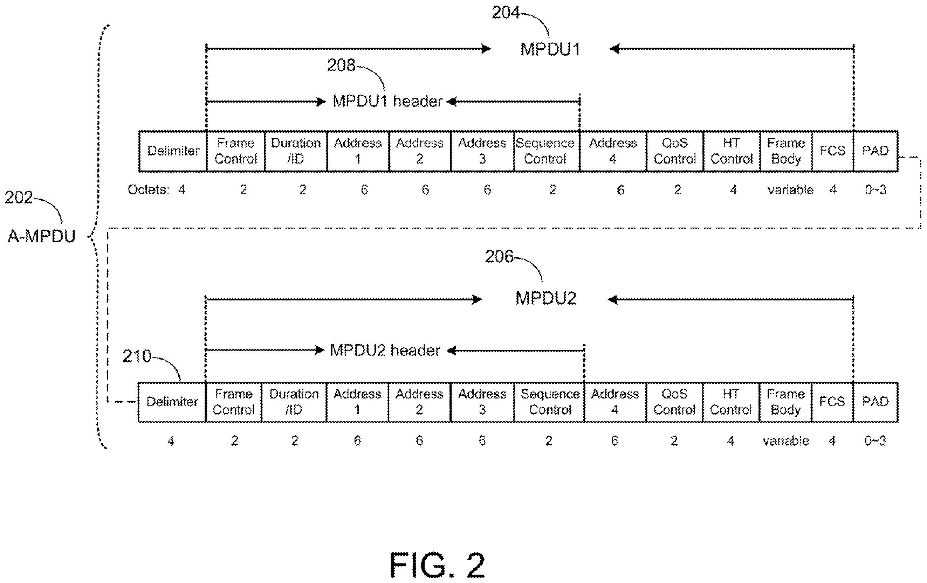

FIG. 2 depicts an illustrative schematic diagram of an A-MPDU (e.g., 202) frame containing two MPDUs (e.g., 204 and 206), where the MPDUs are separated by one or more delimiters. Each MPDU is prefixed with a delimiter. The delimiter may contain the length of the MPDU, cyclic redundancy checks (CRC) and other fields. In this example, the A-MPDU 202 is sent from a transmitting device (e.g., AP 102) to a receiving device (e.g., a user device 120). Hence, the A-MPDU 202 may be addressed to the same receiving device, where one or more fields in MPDU 204 and MPDU 206 may have the same values.

A typical MPDU may contain an MPDU header (e.g., 208) and other control fields. For example, the MPDU 204 may contain a Frame Control, a Duration/ID, an Address 1-3, a Sequence Control an Address 4, a QoS Control, an HT Control, a Frame Body, a Frame Check Sequence (FCS), followed by 0 - 3 bytes of padding (PAD). A set of fields, known as delimiters and padding bits are inserted before and after each MPDU. Delimiters (e.g., 210) are inserted before each MPDU and padding bits are added at the tail. The basic operation of the delimiter is to define the MPDU position and length inside the aggregated frame. It is understood these fields may vary and may depend on the wireless standard being followed, including IEEE 802.1 1ax.

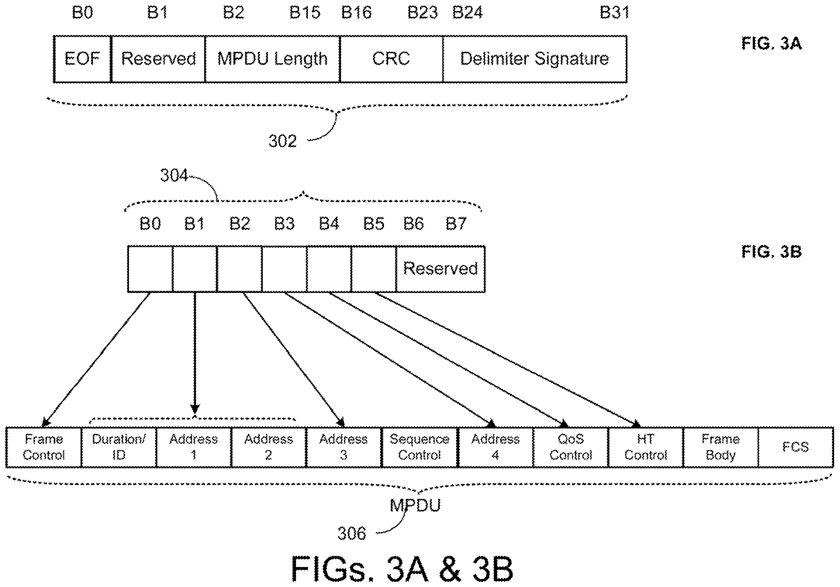

FIG. 3A depicts an illustrative schematic diagram of a delimiter field 302 format. For example, in accordance to one or more wireless standards, including the IEEE 802.1 1ax, the delimiter field 302 may have a size of 32 bits and may include one or more fields such as an End of Frame (EOF) field, a Reserved field, an MPDU length field, a CRC field and a Delimiter Signature field. For example, the EOF may be at bit zero or B0 of the delimiter field 302, the Reserved field may be at bit 1 or B1, the MPDU length field may be from bit 2 to bit 15 (B2-B15), the CRC field may be from bit 16 to bit 23 (B16-B23), and the Delimiter Signature may be from bit 24 to bit 31 (B23-B24). In one embodiment, the delimiter field 302 may be used to determine whether an MPDU is compressed or not. For example, if the MPDU header is compressed, the reserved bit B1 of the delimiter field 302 may be set to a value of "1," otherwise, B1 may be set to a value of "0." Compression may be achieved for example by omitting fields that have the same information and/or values between one or more MPDUs within an A-MPDU. For example, if the Frame Control field of an MPDU is the same as the Frame Control field of another MPDU with an A-MPDU, the Frame Control field may be omitted and the reserved bit B1 of the delimiter field may be set to "1" to indicate that compression occurred.

FIG. 3B depicts an illustrative schematic diagram of a compression control field 304, in accordance with one or more example embodiments of the present disclosure. The compression control field 304 may be a field included in an A-MPDU frame to determine the compression used. In one embodiment, the compression control field 304 may be configured to indicate which fields within an MPDU are omitted because of compression. For example, when compression is performed, bit B1 of the delimiter field is set to "1." In order to determine which fields within the MPDU have been compressed (omitted), the compression control field 304 may be configured by setting one or more of its bits to "1" or "0," based on whether compression occurred or not for the associated field.

In one embodiment, each bit of the compression control field 304 may be associated with one or more field of an MPDU frame (e.g., 306) within an A-MPDU. For example, compression (e.g., omission) of the Frame Control field of MPDU 306 may be indicated by setting bit B0 of the compression control field 304 to a value of "1." If no compression of the Frame Control Field occurred, then the value of bit B0 may be set to a value of "0." Similarly, the Duration/ID, Address 1, and Address 2, may be associated with bit B1 of the compression control field 304. Address 3 and Address 4 may be associated with bits B2 and B3 of the compression control field 304 respectively. QoS Control may be associated with bit B4 and HT control may be associated with bit B5.

Some MPDU fields may have characteristic that may affect the use (or non-use) of a bit representation in the compression control field 304. For example, the fields Duration/ID, Address 1, and Address 2 of MPDU 306 have the characteristic of being the same between MPDUs in an A-MPDU. Consequently, the use of one bit in the compression control field 304 may be enough to indicate whether these fields are compressed. Another example is that the Sequence Control field has the characteristic of being different between MPDUs in an A-MPDU. Consequently, this field may not be omitted (compressed) and hence it is not necessary to assign a bit in the compression control field 304 to represent the Sequence Control field. At the receiving device (e.g., user device 120), the compression control field 304 may be used to identify which fields have been compressed or omitted. The compression control field 304 may be used at the receiving device in order to reconstruct (decompress) the full MPDUs.

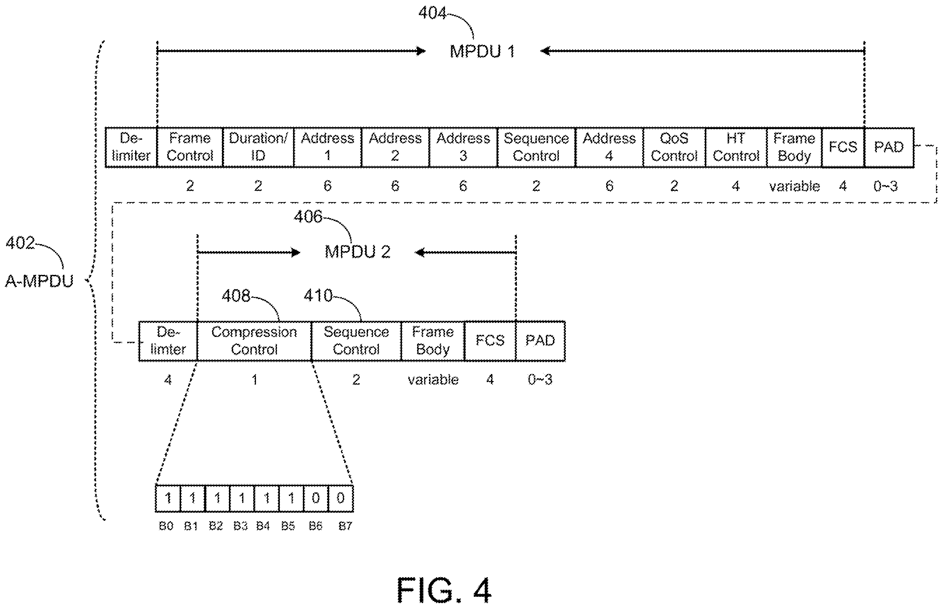

FIG. 4 depicts an illustrative schematic diagram of an A-MPDU 402 in accordance with one or more example embodiments of the present disclosure. In this example, two MPDUs (e.g., 404 and 406) are contained in the A-MPDU 402. These two MPDUs may be such that all the fields of MPDU2 406 are the same as MPDU1 404, except for the Sequence Control field 410. In accordance with the present disclosure, compression may be employed. The compression control field 408 may be configured to represent that. For example, the compression field 408 may contain bits B0, B1, B2, B3, B4 and B5 set to "1," or "0" and since bits B6 and B7 are reserved, they may be set to 0 in this example. With the compression of MPDU 406 in the A-MPDU 402, a reduction of about 33 bytes in the overhead may be achieved. This is because compressing the fields: Frame Control (size 2 bytes), Duration/ID (size 2 bytes), Address 1 (size 6 bytes), Address 2 (size 6 bytes), Address 3 (size 6 bytes), Address 4 (size 6 bytes), QoS control (size 2 bytes), and HT Control (size 4 bytes). The total size of these fields is 34 bytes; however, since MPDU2 would include the compression control field 408, which has a size of 1 byte, the total reduction is 33 bytes. It is understood that the above is only an example and should not be construed as a limitation.

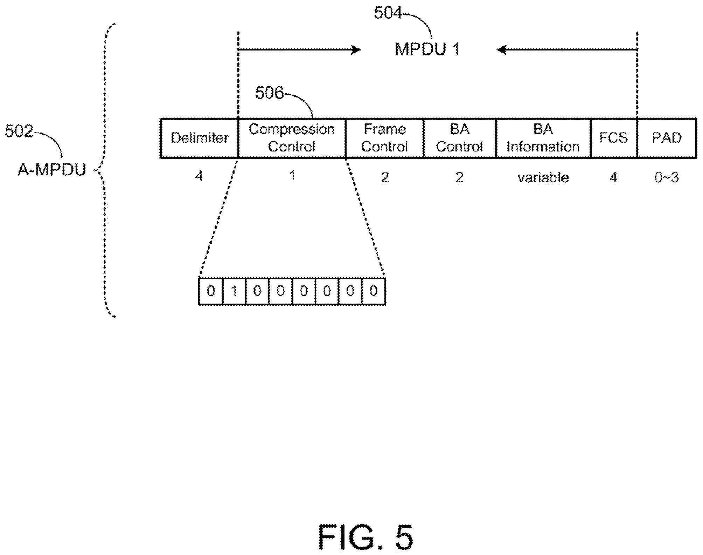

FIG. 5 depicts an illustrative schematic diagram of an A-MPDU 502 having only one MPDU 504 in accordance with one or more example embodiments of the present disclosure. For example, the A-MPDU 502 may contain one MPDU 504 during communication between a user device 120 and an AP 102 in the uplink data direction (e.g., from user device 120 to AP 102). In the uplink scenario, the transmitting device is user device 120 and the receiving device is AP 102. Since the receive address (e.g., address of the AP 102) and the transmit address (e.g., address of the user device 120) may be known to the AP 102, the Duration/ID (size 2 bytes), Address 1 (size 6 bytes), Address 2 (size 6 bytes), may be compressed (omitted). Consequently, the compression control field 506 may have bit B1 set to "1" while the rest of its bits are set to "0." The total size of the Duration/ID, Address 1, and Address 2 fields is 14 bytes; however, since MPDU 504 may include the compression control field 506, which has a size of 1 byte, the total reduction is 13 bytes. It is understood that the above is only an example and should not be construed as a limitation. When the receiver receives the A-MPDU 502, it may be possible to determine the values of the Duration/ID, Address 1 and Address 2 fields by using the compression control field 506 because only B1 is set to "1," which indicates that these three fields were omitted but are the same as what the receiving device (e.g., AP 102) already knows. At the receiving device (e.g., user device 120), the compression control field 506 may be used to identify which fields have been compressed or omitted. The compression control field 506 may be used at the receiving device in order to reconstruct (decompress) the full MPDUs. It is understood that the above is only an example and should not be construed as a limitation.

FIG. 6 depicts an illustrative schematic diagram of an A-MPDU 602 having two MPDUs (e.g., 604 and 608), in accordance with one or more example embodiments of the present disclosure. For example, the A-MPDU 602 may contain one MPDU 604 during communication between a user device 120 and an AP 102 in the uplink data direction (e.g., from user device 120 to AP 102). In the uplink scenario, the transmitting device is user device 120 and the receiving device is AP 102. In this example, only the Duration/ID, Address 1 and Address 2 fields are compressed because that information may already be known by the AP 102 when receiving the A-MPDU. The compression control field 608 may have bit B1 set to "1" to indicate that the Duration/ID, Address 1 and Address 2 fields are compressed. Similarly, in the second MPDU (e.g., MPDU 606), the compression control 610 may identify that only Duration/ID, Address 1 and Address 2 fields may be omitted by setting its bit B1 to "1" and the rest of its bits to "0." Therefore, the reduction in overhead may be 13 bytes from the MPDU 606 and 13 bytes from MPDU 608 for a total of 26 bytes. It is understood that the above is only an example and should not be construed as a limitation.

FIG. 7 illustrates a flow diagram of illustrative process 700 for a header compression system in accordance with one or more embodiments of the disclosure.

At block 702, the AP 102 may determine a MAC frame to be sent to a user device 120, wherein the MAC frame includes one or more MPDUs. For example, an A-MPDU may contain two MPDUs. The two MPDUs may have one or more fields that are common between them. These common or duplicated fields may be compressed or omitted. At block 704, the AP 102 may determine at least one field to be omitted from the two MPDUs with the A-MPDU. At block 706, the AP 102 may generate a compression control field including at least one bit set based at least in part on the at least one field. For example, the compression field may contain bits B0, B1, B2, B3, B4 and B5 set to "1," or "0" and since bits B6 and B7 are reserved, they may be set to 0. At block 708, the AP 102 may generate the MAC frame to include the compression control field. For example, after compression, the MAC frame may compress or omit the duplicate fields and by setting the respective bits in the compression control field, the AP 102 may determine which fields were compressed in order to regenerate them when decompressing the MAC frame at the receiving device. At block 710, the AP 102 may send the MAC frame to the user device 120. At the receiving device (e.g., user device 120), the compression control field may be used to identify which fields have been omitted and using that information, the full MPDU may be reconstructed.

FIG. 8 shows a functional diagram of an exemplary communication station 800 in accordance with some embodiments. In one embodiment, FIG. 8 illustrates a functional block diagram of a communication station that may be suitable for use as an AP 102 (FIG. 1) or communication station user device 120 (FIG. 1) in accordance with some embodiments. The communication station 800 may also be suitable for use as a handheld device, mobile device, cellular telephone, smartphone, tablet, netbook, wireless terminal, laptop computer, wearable computer device, femtocell, High Data Rate (HDR) subscriber station, access point, access terminal, or other personal communication system (PCS) device.

The communication station 800 may include physical layer circuitry 802 having a transceiver 810 for transmitting and receiving signals to and from other communication stations using one or more antennas 801. The physical layer circuitry 802 may also include medium access control (MAC) circuitry 804 for controlling access to the wireless medium. The communication station 800 may also include processing circuitry 806 and memory 808 arranged to perform the operations described herein. In some embodiments, the physical layer circuitry 802 and the processing circuitry 806 may be configured to perform operations detailed in FIGs. 2-5.

In accordance with some embodiments, the MAC circuitry 804 may be arranged to contend for a wireless medium and configure frames or packets for communicating over the wireless medium and the physical layer circuitry 802 may be arranged to transmit and receive signals. The physical layer circuitry 802 may include circuitry for modulation/demodulation, upconversion/downconversion, filtering, amplification, etc. In some embodiments, the processing circuitry 806 of the communication station 800 may include one or more processors. In other embodiments, two or more antennas 801 may be coupled to the physical layer circuitry 802 arranged for sending and receiving signals. The memory 808 may store information for configuring the processing circuitry 806 to perform operations for configuring and transmitting message frames and performing the various operations described herein. The memory 808 may include any type of memory, including non-transitory memory, for storing information in a form readable by a machine (e.g., a computer). For example, the memory 808 may include a computer-readable storage device may, read-only memory (ROM), random- access memory (RAM), magnetic disk storage media, optical storage media, flash-memory devices and other storage devices and media.

In some embodiments, the communication station 800 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 800 may include one or more antennas 801. The antennas 801 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 800 may include one or more of a keyboard, a display, a non-volatile memory port, multiple antennas, a graphics processor, an application processor, speakers, and other mobile device elements. The display may be an LCD screen including a touch screen.

Although the communication station 800 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 800 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 800 may include one or more processors and may be configured with instructions stored on a computer-readable storage device memory.

FIG. 9 illustrates a block diagram of an example of a machine 900 or system upon which any one or more of the techniques (e.g., methodologies) discussed herein may be performed. In other embodiments, the machine 900 may operate as a standalone device or may be connected (e.g., networked) to other machines. In a networked deployment, the machine 900 may operate in the capacity of a server machine, a client machine, or both in server-client network environments. In an example, the machine 900 may act as a peer machine in peer-to-peer (P2P) (or other distributed) network environment. The machine 900 may be a personal computer (PC), a tablet PC, a set-top box (STB), a personal digital assistant (PDA), a mobile telephone, wearable computer device, a web appliance, a network router, switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions, where the instructions configure the execution units to carry out a specific operation when in operation. The configuring may occur under the direction of the executions units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with each other via an interlink (e.g., bus) 908. The machine 900 may further include a power management device 932, a graphics display device 910, an alphanumeric input device 912 (e.g., a keyboard), and a user interface (UI) navigation device 914 (e.g., a mouse). In an example, the graphics display device 910, alphanumeric input device 912 and UI navigation device 914 may be a touch screen display. The machine 900 may additionally include a storage device (i.e., drive unit) 916, a signal generation device 918 (e.g., a speaker), a network interface device/transceiver 920 coupled to antenna(s) 930, and one or more sensors 928, such as a global positioning system (GPS) sensor, compass, accelerometer, or other sensor. The machine 900 may include an output controller 934, such as a serial (e.g., universal serial bus (USB), parallel, or other wired or wireless (e.g., infrared (IR), near field communication (NFC), etc.) connection to communicate with or control one or more peripheral devices (e.g., a printer, card reader, etc.)

The storage device 916 may include a machine readable medium 922 on which is stored one or more sets of data structures or instructions 924 (e.g., software) embodying or utilized by any one or more of the techniques or functions described herein. The instructions 924 may also reside, completely or at least partially, within the main memory 904, within the static memory 906, or within the hardware processor 902 during execution thereof by the machine 900. In an example, one or any combination of the hardware processor 902, the main memory 904, the static memory 906, or the storage device 916 may constitute machine-readable media.

While the machine-readable medium 922 is illustrated as a single medium, the term "machine readable medium" may include a single medium or multiple media (e.g., a centralized or distributed database, and/or associated caches and servers) configured to store the one or more instructions 924.

The term "machine readable medium" may include any medium that is capable of storing, encoding, or carrying instructions for execution by the machine 900 and that cause the machine 900 to perform any one or more of the techniques of the present disclosure, or that is capable of storing, encoding or carrying data structures used by or associated with such instructions. Non-limiting machine-readable medium examples may include solid-state memories, and optical and magnetic media. In an example, a massed machine-readable medium includes a machine-readable medium with a plurality of particles having resting mass. Specific examples of massed machine-readable media may include non-volatile memory, such as semiconductor memory devices (e.g., Electrically Programmable Read-Only Memory (EPROM), or Electrically Erasable Programmable Read-Only Memory (EEPROM)) and flash memory devices; magnetic disks, such as internal hard disks and removable disks; magneto-optical disks; and CD-ROM and DVD- ROM disks.

The instructions 924 may further be transmitted or received over a communications network 926 using a transmission medium via the network interface device/transceiver 920 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), Plain Old Telephone (POTS) networks, wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, and peer-to-peer (P2P) networks, among others. In an example, the network interface device/transceiver 920 may include one or more physical jacks (e.g., Ethernet, coaxial, or phone jacks) or one or more antennas to connect to the communications network 926. In an example, the network interface device/transceiver 920 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 900, and includes digital or analog communications signals or other intangible media to facilitate communication of such software.

In example embodiments of the disclosure, there may be a method. The method may include determining, by a first computing device comprising one or more processors and one or more transceiver components, a Medium Access Control (MAC) frame to be sent to a second computing device, wherein the MAC frame may include one or more MAC Protocol Data Units (MPDUs). The method may include determining, by the first computing device, one or more fields included in the one or more MPDUs.The method may include generating, by the first computing device, a compression control field that includes one or more bits associated with the one or more fields included in the one or more MPDUs. The method may include generating, by the first computing device, the MAC frame to include the compression control field. The method may include causing to send, by the first computing device, the MAC frame to the second computing device. The one MPDU may include a first MPDU and a second MPDU. Generating the compression control field may include setting at one of the one or more bits to "1" if the one or more fields is to be omitted from the one or more MPDU. Generating the compression control field may include setting at one of the one or more bits to "0" if the one or more fields is not to be omitted from the one or more MPDU. The one or more MPDU may be included in an aggregated MPDU (A-MPDU). The compression control field may have a size of 1 byte. The method may further include omitting the one or more fields to be omitted from the one or more MPDU if the one or more fields may be a duplicate of another field within the MAC frame.

According to example embodiments of the disclosure, there may be a device. The device may include a transceiver configured to transmit and receive wireless signals. The device may include an antenna coupled to the transceiver, one or more processors in communication with the transceiver, at least one memory that stores computer-executable instructions, and at least one processor of the one or more processors configured to access the at least one memory. The at least one processor of the one or more processors is configured to execute the computer-executable instructions to determine a Medium Access Control (MAC) frame to be sent to a computing device, wherein the MAC frame includes one or more MAC Protocol Data Units (MPDUs) . The at least one processor of the one or more processors may be configured to execute the computer-executable instructions to determine one or more fields included in the one or more MPDUs. The at least one processor of the one or more processors may be configured to execute the computer-executable instructions to generate a compression control field that includes one or more bits associated with the one or more fields included in the one or more MPDUs. The at least one processor of the one or more processors may be configured to execute the computer-executable instructions to generate the MAC frame to include the compression control field. The at least one processor of the one or more processors may be configured to execute the computer-executable instructions to cause to send the MAC frame to the computing device. The one or more MPDUs may include a first MPDU and a second MPDU. Generating the compression control field may include setting one of the one or more bits to "1" when the one or more fields is to be omitted from the one or more MPDUs. Generating the compression control field may include setting at one of the one or more bits to "0" when the one or more fields is not to be omitted from the one or more MPDUs. The one or more MPDUs may be included in an aggregated MPDU. The compression control field may have a size of 1 byte. The at least one processor of the one or more processors may be configured to execute the computer-executable instructions to omit a first field of the one or more fields included in the one or more MPDUs when the first field is a duplicate of a second field of the one or more fields.

In example embodiments of the disclosure, there may be a computer-readable medium storing computer-executable instructions which, when executed by a processor, cause the processor to perform operations. The operations may include determining a Medium Access Control (MAC) frame to be sent to a computing device, wherein the MAC frame includes one or more MAC Protocol Data Units (MPDUs). The operations may include determining one or more fields included in the one or more MPDUs. The operations may include generating a compression control field that includes one or more bits associated with the one or more fields included in the one or more MPDUs. The operations may include generating the MAC frame to include the compression control field. The operations may include causing to send the MAC frame to the computing device. The one or more MPDUs may include a first MPDU and a second MPDU. Generating the compression control field may include setting one of the one or more bits to "1" when the one or more fields is to be omitted from the one or more MPDUs. Generating the compression control field may include setting at one of the one or more bits to "0" when the one or more fields is not to be omitted from the one or more MPDUs. The one or more MPDUs may be included in an aggregated MPDU. The compression control field may have a size of 1 byte. The operations may include omitting a first field of the one or more fields included in the one or more MPDUs when the first field is a duplicate of a second field of the one or more fields.

In example embodiments of the disclosure, there may be a system. The system may include at least one memory that store computer-executable instructions, and at least one processor configured to access the at least one memory, wherein the at least one processor may be configured to execute the computer-executable instructions to determine a Medium Access Control (MAC) frame to be sent to a second computing device, wherein the MAC frame may include one or more MAC Protocol Data Units (MPDUs). The at least one processor may be configured to execute the computer-executable instructions to determine one or more fields included in the one or more MPDUs. The at least one processor may be configured to execute the computer-executable instructions to generate a compression control field that includes one or more bits associated with the one or more fields included in the one or more MPDUs The at least one processor may be configured to execute the computer-executable instructions to generate the MAC frame to include the compression control field The at least one processor may be configured to execute the computer-executable instructions to cause to send, by the first computing device, the MAC frame to the second computing device. The one MPDU may include a first MPDU and a second MPDU. Generating the compression control field may include setting at one of the one or more bits to "1" if the one or more fields is to be omitted from the one or more MPDU. Generating the compression control field may include setting at one of the one or more bits to "0" if the one or more fields is not to be omitted from the one or more MPDU. The one or more MPDU may be included in an aggregated MPDU (A-MPDU). The compression control field may have a size of 1 byte. The at least one processor may be configured to execute the computer-executable instructions to omit the one or more fields to be omitted from the one or more MPDU if the one or more fields may be a duplicate of another field within the MAC frame.

In example embodiments of the disclosure, there may be an apparatus. The apparatus may include a means for determining a Medium Access Control (MAC) frame to be sent to a computing device, wherein the MAC frame includes one or more MAC Protocol Data Units (MPDUs). The apparatus may include a means for determining one or more fields included in the one or more MPDUs. The apparatus may include a means for generating a compression control field that includes one or more bits associated with the one or more fields included in the one or more MPDUs. The apparatus may include a means for generating the MAC frame to include the compression control field. The apparatus may include a means for causing to send the MAC frame to the computing device. The one or more MPDUs may include a first MPDU and a second MPDU. Generating the compression control field may include setting one of the one or more bits to "1" when the one or more fields is to be omitted from the one or more MPDUs. Generating the compression control field may include setting at one of the one or more bits to "0" when the one or more fields is not to be omitted from the one or more MPDUs. The one or more MPDUs may be included in an aggregated MPDU. The compression control field may have a size of 1 byte. The apparatus may include a means for omitting a first field of the one or more fields included in the one or more MPDUs when the first field is a duplicate of a second field of the one or more fields.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, can be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that can direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. specific terms are employed herein, they are used in a generic and descriptive sense only and not for purposes of limitation.

## Claims

1. A device, comprising:
a transceiver configured to transmit and receive wireless signals;
an antenna coupled to the transceiver;
one or more processors in communication with the transceiver;
at least one memory that stores computer-executable instructions; and
at least one processor of the one or more processors configured to access the at least one memory, wherein the at least one processor of the one or more processors is configured to execute the computer-executable instructions to:
determine a Medium Access Control, MAC, frame to be sent to a computing device, wherein the MAC frame includes two or more MAC Protocol Data Units, MPDUs;
determine one or more fields included in the two or more MPDUs that are duplicates;
generate a compression control field that includes one or more bits associated with the one or more fields included in the two or more MPDUs, wherein the one or more bits associated with the one or more fields indicate whether the associated one or more fields are to be omitted from the MAC frame;
generate the MAC frame to include the compression control field; and
cause to send the MAC frame to the computing device,
wherein the one or more processors are further configured to generate the MAC frame by omitting a first field of the one or more fields included in the two or more MPDUs when the first field is a duplicate of a second field of the one or more fields.

2. The device of claim 1, wherein the two or more MPDUs include a first MPDU and a second MPDU.

3. The device of any one of claims 1 or 2, wherein generating the compression control field includes setting one of the one or more bits to "1" when the one or more fields is to be omitted from the two or more MPDUs.

4. The device of any one of claims 1, 2 or 3, wherein generating the compression control field includes setting at one of the one or more bits to "0" when the one or more fields is not to be omitted from the two or more MPDUs.

5. The device of any one of claims 1, 2, 3 or 4, wherein the two or more MPDUs is included in an aggregated MPDU.

6. The device of any one of claims 1, 2, 3, 4 or 5, wherein the compression control field has a size of 1 byte.

7. A method comprising:
determining, by a first computing device comprising one or more processors and one or more transceiver components, a Medium Access Control, MAC, frame to be sent to a second computing device, wherein the MAC frame includes one or more MAC Protocol Data Units, MPDUs;
determining, by the first computing device, one or more fields included in the two or more MPDUs that are duplicates;
generating, by the first computing device, a compression control field that includes one or more bits associated with the one or more fields included in the two or more MPDUs, wherein the one or more bits associated with the one or more fields indicate whether the associated one or more fields are to be omitted from the MAC frame;
generating, by the first computing device, the MAC frame to include the compression control field; and
causing to send, by the first computing device, the MAC frame to the second computing device;
wherein generating the MAC frame, by the first computing device, further comprises omitting a first field of the one or more fields included in the two or more MPDUs when the first field is a duplicate of a second field of the one or more fields.

8. The method of claim 7, wherein the one MPDU includes a first MPDU and a second MPDU.

9. The method of any one of claims 7 or 8, wherein generating the compression control field includes setting at one of the one or more bits to "1" if the one or more fields is to be omitted from the two or more MPDUs.

10. The method of any one of claims 7, 8 or 9, wherein generating the compression control field includes setting at one of the one or more bits to "0" if the one or more fields is not to be omitted from the two or more MPDUs.

11. The method of any one of claims 7, 8, 9 or 10, wherein the two or more MPDUs are included in an aggregated MPDU, A-MPDU.

12. The method of any one of claims 7, 8, 9, 10 or 11, wherein the compression control field has a size of 1 byte.

13. An apparatus comprising means to perform a method as claimed in any one of claims 7, 8, 9, 10, 11, or 12.

14. Machine-readable storage including machine-readable instructions, when executed, to implement a method or realize an apparatus as claimed in any one of claims 7, 8, 9, 10, 11, 12, or 13.

## Patentansprüche

1. Gerät, das Folgendes umfasst:
einen Transceiver, der konfiguriert ist, um Funksignale zu senden und zu empfangen;
eine an den Transceiver gekoppelte Antenne;
einen oder mehrere mit dem Transceiver kommunizierende Prozessoren;
mindestens einen Speicher, der computerausführbare Befehle speichert; und
wobei mindestens ein Prozessor von dem einen oder den mehreren Prozessoren konfiguriert ist, um auf den mindestens einen Speicher zuzugreifen, wobei der mindestens eine Prozessor von dem einen oder den mehreren Prozessoren konfiguriert ist, um die computerausführbaren Befehle zu Folgendem auszuführen:
Bestimmen eines an ein Computergerät zu sendenden MAC-Rahmens (MAC = Medium Access Control), wobei der MAC-Rahmen zwei oder mehr MAC Protocol Data Units, MPDUs, enthält;
Bestimmen eines oder mehrerer in den zwei oder mehr MPDUs enthaltener Felder, die Duplikate sind;
Generieren eines Compression-Control-Felds, das ein oder mehrere Bits, die dem einen oder den mehreren in den zwei oder mehr MPDUs enthaltenen Feldern zugeordnet sind, enthält, wobei das eine oder die mehreren Bits, die dem einen oder den mehreren Feldern zugeordnet sind, angeben, ob das zugeordnete eine oder die zugeordneten mehreren Felder im MAC-Rahmen wegzulassen sind;
Generieren des MAC-Rahmens so, dass er das Compression-Control-Feld enthält; und
Bewirken, dass der MAC-Rahmen an das Computergerät gesendet wird,
wobei der eine oder die mehreren Prozessoren ferner konfiguriert sind, um den MAC-Rahmen unter Weglassung eines ersten Felds von dem einen oder den mehreren in den zwei oder mehr MPDUs enthaltenen Feldern, wenn das erste Feld ein Duplikat eines zweiten Felds von dem einen oder den mehreren Feldern ist, zu generieren.

2. Gerät nach Anspruch 1, wobei die zwei oder mehr MPDUs eine erste MPDU und eine zweite MPDU enthalten.

3. Gerät nach Anspruch 1 oder 2, wobei das Generieren des Compression-Control-Felds Setzen eines von dem einen oder den mehreren Bits auf "1", wenn das eine oder die mehreren Felder in den zwei oder mehr MPDUs wegzulassen sind, enthält.

4. Gerät nach Anspruch 1, 2 oder 3, wobei das Generieren des Compression-Control-Felds Setzen eines von dem einen oder den mehreren Bits auf "0", wenn das eine oder die mehreren Felder nicht in den zwei oder mehr MPDUs wegzulassen sind, enthält.

5. Gerät nach Anspruch 1, 2, 3 oder 4, wobei die zwei oder mehr MPDUs in einer Aggregated MPDU enthalten sind.

6. Gerät nach Anspruch 1, 2, 3, 4 oder 5, wobei das Compression-Control-Feld 1 Byte groß ist.

7. Verfahren, das Folgendes umfasst:
durch ein erstes Computergerät, das einen oder mehrere Prozessoren und eine oder mehrere Transceiverkomponenten umfasst, Bestimmen eines an ein zweites Computergerät zu sendenden MAC-Rahmens (MAC = Medium Access Control), wobei der MAC-Rahmen zwei oder mehr MAC Protocol Data Units, MPDUs, enthält;
Bestimmen eines oder mehrerer in den zwei oder mehr MPDUs enthaltener Felder, die Duplikate sind, durch das erste Computergerät;
Generieren eines Compression-Control-Felds, das ein oder mehrere Bits, die dem einen oder den mehreren in den zwei oder mehr MPDUs enthaltenen Feldern zugeordnet sind, enthält, durch das erste Computergerät, wobei das eine oder die mehreren Bits, die dem einen oder den mehreren Feldern zugeordnet sind, angeben, ob das zugeordnete eine oder die zugeordneten mehreren Felder im MAC-Rahmen wegzulassen sind;
Generieren des MAC-Rahmens so, dass er das Compression-Control-Feld enthält, durch das erste Computergerät; und
Bewirken, dass der MAC-Rahmen durch das erste Computergerät an das zweite Computergerät gesendet wird;
wobei das Generieren des MAC-Rahmens durch das erste Computergerät ferner Weglassen eines ersten Felds von dem einen oder den mehreren in den zwei oder mehr MPDUs enthaltenen Feldern, wenn das erste Feld ein Duplikat eines zweiten Felds von dem einen oder den mehreren Feldern ist, umfasst.

8. Verfahren nach Anspruch 7, wobei die eine MPDU eine erste MPDU und eine zweite MPDU enthält.

9. Verfahren nach Anspruch 7 oder 8, wobei das Generieren des Compression-Control-Felds Setzen eines von dem einen oder den mehreren Bits auf "1", wenn das eine oder die mehreren Felder in den zwei oder mehr MPDUs wegzulassen sind, enthält.

10. Verfahren nach Anspruch 7, 8 oder 9, wobei das Generieren des Compression-Control-Felds Setzen eines von dem einen oder den mehreren Bits auf "0", wenn das eine oder die mehreren Felder nicht in den zwei oder mehr MPDUs wegzulassen sind, enthält.

11. Verfahren nach Anspruch 7, 8, 9 oder 10, wobei die zwei oder mehr MPDUs in einer Aggregated MPDU, A-MPDU, enthalten sind.

12. Verfahren nach Anspruch 7, 8, 9, 10 oder 11, wobei das Compression-Control-Feld 1 Byte groß ist.

13. Vorrichtung, die Mittel zum Durchführen eines Verfahrens nach Anspruch 7, 8, 9, 10, 11 oder 12 umfasst.

14. Maschinenlesbarer Speicher, der maschinenlesbare Befehle, die, wenn sie ausgeführt werden, zum Implementieren eines Verfahrens oder zum Realisieren einer Vorrichtung nach Anspruch 7, 8, 9, 10, 11, 12 oder 13 dienen, enthält.

## Revendications

1. Dispositif comprenant :
un émetteur récepteur configuré pour transmettre et recevoir des signaux sans fil,
une antenne couplée à l'émetteur récepteur,
un ou plusieurs processeurs communiquant avec l'émetteur récepteur,
au moins une mémoire qui stocke des instructions exécutables par ordinateur, et
au moins un processeur parmi le ou les processeurs, configuré pour accéder à la ou aux mémoires, le ou les processeurs parmi le ou les processeurs étant configuré pour exécuter les instructions exécutables par ordinateur pour :
déterminer une trame de commande d'accès au support, MAC, à envoyer à un dispositif de calcul, la trame de commande MAC incluant deux unités de données au protocole de commande MAC, MPDU, ou plus,
déterminer un ou plusieurs champs inclus dans les deux unités MPDU ou plus qui sont des copies,
générer un champ de commande de compression qui inclut un ou plusieurs bits associés à ce ou à ces champs inclus dans les deux unités MPDU ou plus, le ou les bits associés à ce ou à ces champs indiquant si le ou les champs associés doivent être omis de la trame de commande MAC,
générer la trame de commande MAC afin d'inclure le champ de commande de compression, et
provoquer l'envoi de la trame de commande MAC au dispositif de calcul,
dans lequel le ou les processeurs sont en outre configurés pour générer la trame de commande MAC en omettant un premier champ parmi le ou les champs inclus dans les deux unités MPDU ou plus lorsque le premier champ est une copie d'un second champ parmi le ou les champs.

2. Dispositif selon la revendication 1, dans lequel les deux unités MPDU ou plus incluent une première unité MPDU et une seconde unité MPDU.

3. Dispositif selon l'une quelconque des revendications 1 ou 2, dans lequel la génération du champ de commande de compression inclut le positionnement de l'un du ou des bits à « 1 » lorsque le ou les champs doivent être omis des deux unités MPDU ou plus.

4. Dispositif selon l'une quelconque des revendications 1, 2 ou 3, dans lequel la génération du champ de commande de compression inclut le positionnement de l'un du ou des bits à « 0 » lorsque le ou les champs ne doivent pas être omis des deux unités MPDU ou plus.

5. Dispositif selon l'une quelconque des revendications 1, 2, 3 ou 4, dans lequel les deux unités MPDU ou plus sont incluses dans une unité MPDU agrégée.

6. Dispositif selon l'une quelconque des revendications 1, 2, 3, 4 ou 5, dans lequel le champ de commande de compression présente une taille de 1 octet.

7. Procédé comprenant :
la détermination, par un premier dispositif de calcul comprenant un ou plusieurs processeurs et un ou plusieurs composants émetteurs récepteurs, d'une trame de commande d'accès au support, MAC, à envoyer à un second dispositif de calcul, la trame de commande MAC incluant une ou plusieurs unités de données au protocole de commande MAC, MPDU,
la détermination, par le premier dispositif de calcul, d'un ou plusieurs champs inclus dans les deux unités MPDU ou plus qui sont des copies,
la génération, par le premier dispositif de calcul, d'un champ de commande de compression qui inclut un ou plusieurs bits associés à ce ou à ces champs inclus dans les deux unités MPDU ou plus, le ou les bits associés à ce ou à ces champs indiquant si le ou les champs associés doivent être omis de la trame de commande MAC,
la génération, par le premier dispositif de calcul, de la trame de commande MAC afin d'inclure le champ de commande de compression, et
l'action permettant d'envoyer, par le premier dispositif de calcul, la trame de commande MAC au second dispositif de calcul,
dans lequel la génération de la trame de commande MAC, par le premier dispositif de calcul, comprend en outre l'omission d'un premier champ parmi le ou les champs inclus dans les deux unités MPDU ou plus lorsque le premier champ est une copie d'un second champ parmi le ou les champs.

8. Procédé selon la revendication 7, dans lequel ladite unité MPDU inclut une première unité MPDU et une seconde unité MPDU.

9. Procédé selon l'une quelconque des revendications 7 ou 8, dans lequel la génération du champ de commande de compression inclut le positionnement de l'un du ou des bits à « 1 » lorsque le ou les champs doivent être omis des deux unités MPDU ou plus.

10. Procédé selon l'une quelconque des revendications 7, 8 ou 9, dans lequel la génération du champ de commande de compression inclut le positionnement de l'un du ou des bits à « 0 » lorsque le ou les champs de doivent pas être omis des deux unités MPDU ou plus.

11. Procédé selon l'une quelconque des revendications 7, 8, 9 ou 10, dans lequel les deux unités MPDU ou plus sont incluses dans une unité MPDU agrégée, A-MPDU.

12. Procédé selon l'une quelconque des revendications 7, 8, 9, 10 ou 11, dans lequel le champ de commande de compression présente une taille de 1 octet.

13. Appareil comprenant un moyen permettant de réaliser un procédé conforme à l'une quelconque des revendications 7, 8, 9, 10, 11 ou 12.

14. Dispositif de stockage pouvant être lu par une machine incluant des instructions pouvant être lues par une machine qui, lorsqu'elles sont exécutées, permettent d'implémenter un procédé de réaliser un appareil conforme à l'une quelconque des revendications 7, 8, 9, 10, 11, 12 ou 13.
